# EUROPEAN PATENT APPLICATION

(11) **EP 4 629 068 A1**
(43) Date of publication of application: **08.10.2025**
(21) Application number: 23909236.4
(22) Date of filing: 25.08.2023
(51) Int. Cl.: G06F 9/445, H04L 67/12, H04L 67/00, H04L 67/51, H04W 4/50, G06F 9/54

(54) **SERVICE MANAGEMENT METHOD AND APPARATUS, APPLICATION MANAGEMENT METHOD AND APPARATUS, AND VEHICLE**

(30) Priority: 30.12.2022 CN 202211739241
(71) Applicant: Guangzhou Automobile Group Co., Ltd., Guangzhou, Guangdong 510030 (CN)
(72) Inventor: WU, Jian, Guangzhou, Guangdong 511434 (CN); LIANG, Weiqiang, Guangzhou, Guangdong 511434 (CN); LIAO, Lei, Guangzhou, Guangdong 511434 (CN); ZHANG, Shun, Guangzhou, Guangdong 511434 (CN); SHI, Ruihao, Guangzhou, Guangdong 511434 (CN); LI, Hui, Guangzhou, Guangdong 511434 (CN)
(74) Representative: Zaboliene, Reda
(86) International application number: PCT/CN2023/114918
(87) International publication number: WO 2024/139296

(57) **Abstract**

Disclosed in the embodiments of the present application includes a service management method, an application management method, an apparatus, and a vehicle. The service management method includes: acquiring a new service and information corresponding to the new service; initializing a service subscription table of a vehicle based on the information corresponding to the new service; in response to a successful registration of the new service, acquiring a first target application based on the initialized service subscription table; publishing the new service to the first target application to inform the first target application that the new service is in an available status; and in response to an invoking request of the first target application for the new service, providing the first target application with service content corresponding to the new service. By means of the method, a plurality of tables related to services can be dynamically maintained by a middleware, such that when the first target application and the new service do not need to know detailed information about each other, the first target application may obtain service content corresponding to the new service by the invoking request, so as to realize decoupling between the service and the application, thereby reducing the development and management costs.

## Description

The present application claims a priority to a Chinese patent application filed with the China National Intellectual Property Administration on December 30, 2022, with an application number 202211739241.9 and entitled "SERVICE MANAGEMENT METHOD, APPLICATION MANAGEMENT METHOD, APPARATUS AND VEHICLE", entire contents of which are incorporated by reference in this disclosure.

### Technical Field

The present application relates to an automobile technology field, and more particular to a service management method, an application management method, an apparatus, and a vehicle.

### Background

With a development of an automobile technology, applications on vehicles are becoming more and more abundant, and each application can realize more and more functions. When the application realizes relevant functions, it needs to invoke a corresponding service. In a relevant method, a communication between the service and the application can be realized based on a SOMEIP protocol. However, in the relevant method, there is still a problem of a close association between the application and the service, which increases development and management costs.

### Summary

In view of the problem, embodiments of the present application propose a service management method, an application management method, an apparatus, and a vehicle to improve the problem.

In a first aspect, an embodiment of the present application provides a service management method, which is applied to a SOA (Service-Oriented Architecture) service management middleware, and comprises: obtaining a new service and information corresponding to the new service;
initialize a service subscription table of a vehicle based on the information corresponding to the new service, the service subscription table being used to record subscription relationships between services and applications, the subscription relationships comprising implemented, subscribed, un-subscribable, and unsubscribed; in response to the new service being successfully registered, obtaining a first target application based on the initialized service subscription table, the first target application being an application that can subscribe to the new service; publishing the new service to the first target application to inform the first target application that the new service is in an available status; in response to a subscription operation of the first target application, updating the initialized service subscription table, wherein the subscription relationship between the new service and the first target application in the initialized service subscription table is unsubscribed, and the subscription relationship between the new service and the first target application in the updated service subscription table is subscribed; in response to an invoking request of the first target application to the new service, providing service content corresponding to the new service to the first target application.

In the second aspect, the present application embodiment provides an application management method, which is applied to SOA application management middleware, and comprises: obtaining a new application and information corresponding to the new application; initializing a service subscription table of a vehicle based on the information corresponding to the new application, the service subscription table being used to record subscription relationships between services and applications, the subscription relationships comprising implemented, subscribed, un-subscribable, and unsubscribed; obtaining a first target service in response to a subscription instruction of the new application, the subscription instruction comprising a service required by the new application, and the first target service being a service that the new application can subscribe to; updating the initialized service subscription table based on the first target service, so that the first target service can be invoked by the new application, wherein the subscription relationship between the new application and the first target service in the initialized service subscription table is unsubscribed, and the subscription relationship between the new application and the first target service in the updated service subscription table is subscribed; providing service content corresponding to the first target service to the new application in response to an invoking request of the new application to the first target service.

In a third aspect, the present application embodiment provides a service management apparatus that runs on a SOA service management middleware and comprises: a service and information obtaining unit, being used to obtain a new service and information corresponding to the new service; a list initialization unit, being used to initialize a service subscription table of the vehicle based on the information corresponding to the new service, the service subscription table being used to record subscription relationships between services and applications; a service registration unit, being used to , in response to the new service being successfully registered, obtain a first target application based on the initialized service subscription table, wherein the first target application is an application that can subscribe to the new service; a service publishing unit, being used to publish the new service to the first target application to inform the first target application that the new service is in an available status.;
a list updating unit, being used to update the initialized service subscription table in response to a subscription operation of the first target application, wherein the subscription relationship between the new service and the first target application in the initialized service subscription table is unsubscribed, and the subscription relationship between the new service and the first target application in the updated service subscription table is subscribed; a service invoking unit, being used to provide service content corresponding to the new service to the first target application in response to an invoking request of the first target application for the new service.

In a fourth aspect, the present application embodiment provides an application management apparatus that runs on a SOA service management middleware and comprises: a service and information obtaining unit, being used to obtain a new service and information corresponding to the new service; a list initialization unit, being used to initialize a service subscription table of the vehicle based on the information corresponding to the new service, the service subscription table being used to record subscription relationships between services and applications; a service registration unit, being used to , in response to the new service being successfully registered, obtain a first target application based on the initialized service subscription table, wherein the first target application is an application that can subscribe to the new service; a service publishing unit, being used to publish the new service to the first target application to inform the first target application that the new service is in an available status; a list updating unit, being used to update the initialized service subscription table in response to a subscription operation of the first target application, wherein the subscription relationship between the new service and the first target application in the initialized service subscription table is unsubscribed, and the subscription relationship between the new service and the first target application in the updated service subscription table is subscribed; a service invoking unit, being used to provide service content corresponding to the new service to the first target application in response to an invoking request of the first target application for the new service.

In a fifth aspect, an embodiment of the present application provides a vehicle, comprising a processor and a storage device; one or more programs are stored in the storage device and configured to be executed by the processor, and the one or more programs are configured to execute the method.

In a sixth aspect, an embodiment of the present application provides a computer-readable storage medium, in which program codes are stored, wherein the above method is executed when the program codes are run.

The embodiments of the present application provide the service management method, the application management method, the apparatus, the vehicle, and the storage medium. After obtaining the new service and the information corresponding to the new service, the service subscription table of the vehicle for recording the subscription relationships between services and applications is initialized based on the information corresponding to the new service, where the subscription relationships may include implemented, subscribed, un-subscribable, and unsubscribed. In response to the successful registration of the new service, the first target application that can subscribe to the new service is obtained based on the initialized service subscription table, and the new service is published to the first target application to inform the first target application that the new service is in the available status. In response to the subscription operation of the first target application, the initialized service subscription table is updated, where the subscription relationship between the new service and the first target application in the initialized service subscription table is unsubscribed, and the subscription relationship between the new service and the first target application in the updated service subscription table is subscribed. In response to the first target application's invoking request for the new service, the service content corresponding to the new service is provided to the first target application. Through the above method, after obtaining the new service and the information corresponding to the new service, the SOA service management middleware can initialize the service subscription table, and after completing the registration, publication, and subscription of the new service, update the initialized service subscription table, so that the SOA service management middleware can dynamically maintain multiple tables related to services and applications, so that the first target application and the new service do not need to know each other's detailed information (such as the version number, the physical address, etc.), and the first target application can obtain the service content corresponding to the new service by sending the invoking request to the SOA service management middleware, thereby realizing the decoupling of services and applications and reducing development and management costs.

### BRIEF DESCRIPTION OF THE DRAWINGS

In order to more clearly illustrate technical solutions in the embodiments of the present application, drawings required for use in a description of the embodiments will be briefly introduced below. Obviously, the drawings described below are only some embodiments of the present application. For those skilled in the art, other drawings can be obtained based on these drawings without creative work.
FIG. 1A illustrates a flow chart of a service management method proposed in an embodiment of the present application;
FIG. 2A illustrates a flow chart of an application management method proposed in an embodiment of the present application;
FIG. 3 illustrates a schematic diagram showing an overall process proposed in the present application;
FIG. 4A illustrates a structural block diagram of a service management apparatus proposed in an embodiment of the present application;
FIG. 5A illustrates a structural block diagram of an application management apparatus proposed in an embodiment of the present application;
FIG. 6 illustrates a structural block diagram of a vehicle proposed in the present application;
FIG. 7 illustrates a structural block diagram of a computer-readable storage medium for storing program codes for implementing the service management method or the application management method according to the embodiment of the present application.

### DETAILED DESCRIPTION

The following will be combined with the drawings in the embodiments of the present application to clearly and completely describe the technical solutions in the embodiments of the present application. Based on the embodiments in the present application, all other embodiments obtained by ordinary skilled in the art without creative work are within a protection scope of the present application.

In an embodiment of the present application, inventors propose a service management method, an application management method, an apparatus, and a vehicle. After obtaining a new service and information corresponding to the new service, a service subscription table of the vehicle for recording subscription relationships between services and applications is initialized based on the information corresponding to the new service, where the subscription relationships may include implemented, subscribed, un-subscribable, and unsubscribed. In response to a successful registration of the new service, a first target application that can subscribe to the new service is obtained based on the initialized service subscription table, and the new service is published to the first target application to inform the first target application that the new service is in an available status; in response to a subscription operation of the first target application, the initialized service subscription table is updated, where the subscription relationship between the new service and the first target application in the initialized service subscription table is unsubscribed, and the subscription relationship between the new service and the first target application in the updated service subscription table is subscribed; in response to an invoking request for the new service of the first target application, service content corresponding to the new service is provided to the first target application. Through the above method, after obtaining the new service and the information corresponding to the new service, a SOA service management middleware can initialize the service subscription table, and after completing the registration, publishing, and subscription of the new service, update the initialized service subscription table, so that the SOA service management middleware can dynamically maintain a plurality of tables related to services and applications, so that the first target application and the new service do not need to know each other's detailed information (such as a version number, a physical address, etc.), and the first target application can obtain the service content corresponding to the new service by sending an invoking request to the SOA service management middleware, thereby realizing a decoupling of services and applications and reducing development and management costs.

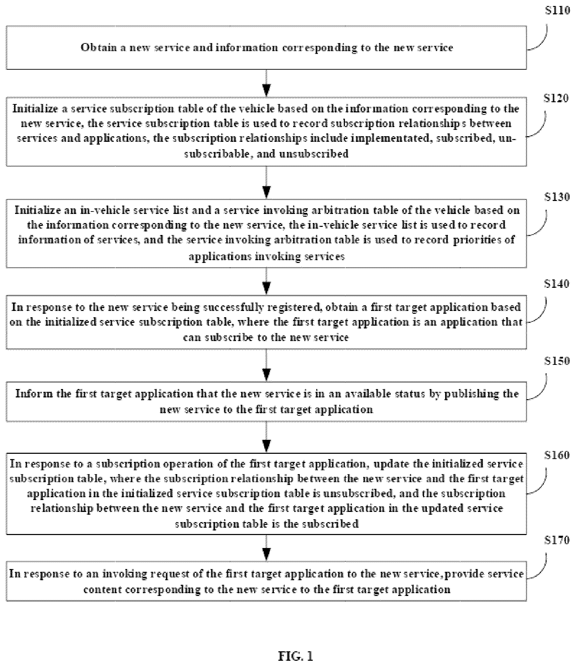

Please refer to FIG1. A service management method provided by the present application is applied to the SOA service management middleware. The service management method includes:
S110: A new service and information corresponding to the new service are obtained.

Among them, the new service may refer to a service that has not been installed on the vehicle or an upgraded service version of a service that has been installed on the vehicle. The information corresponding to the new service may include basic information and application information. The basic information of the new service may include an identity document (ID), a version number, a physical address, a subnet segment number, a service instance identification ID, a service port number, etc. of the new service. The application information of the new service may include a version number of a compatible application a name of a first target application, a name of a second target application, and a priority of the first target application to invoke the new service, where the first target application may be an application that can subscribe to the new service, and the second target application may be an application that implements the new service. When the new service refers to an upgraded service version of a service that has already been installed on the vehicle, the application information of the new service may be the same as application information of a corresponding old version of the service.

In one embodiment, the new service and the information corresponding to the new service can be stored in a cloud, and the vehicle can obtain the new service and the information corresponding to the new service through an OTA (Over-the-Air Technology).

In an embodiment of the present application, the cloud may include multiple versions of the new service, each version of the new service may be applicable to a different vehicle model, and the cloud may send the new service applicable to the vehicle and the information corresponding to the new service to the vehicle based on a model of the vehicle, thereby making it unnecessary for the SOA service management middleware to obtain the multiple versions of the new service from the cloud, and then confirm the service applicable to the vehicle from the multiple versions of the new service, thereby reducing a waste of vehicle storage resources and data processing resources, and speeding up a deployment of the service on the vehicle.

S120: A service subscription table of the vehicle is initialized based on the information corresponding to the new service, where the service subscription table is used to record subscription relationships between services and applications, where the subscription relationships include implemented, subscribed, un-subscribable, and unsubscribed.

Among them, the implemented can mean that the application can provide the corresponding service, the un-subscribable can mean that the application does not have a permission to invoke the corresponding service, the unsubscribed can mean that the application has a permission to invoke the service but has not subscribed to the corresponding service, and the subscribed can mean that the application has a permission to invoke the service and has subscribed to the corresponding service. For example, as shown in a Table 1, a vehicle application can implement a vehicle status service, has a permission but has not subscribed to a door control service, but does not have a permission to subscribe to a window control service.

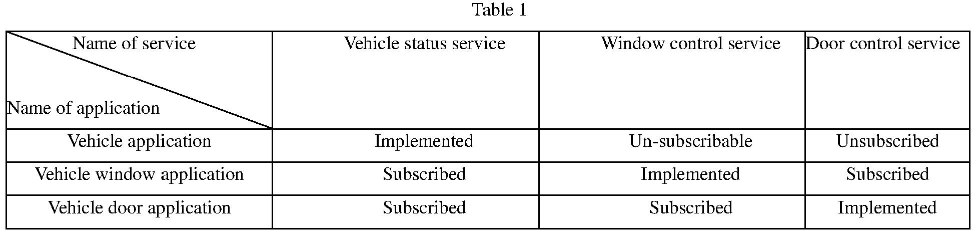

In one embodiment, after the vehicle obtains the new service and the information corresponding to the new service based on step S110, the vehicle can control the SOA (Service Oriented Architecture) service management middleware to initialize the service subscription table based on an in-vehicle application list, the name of the first target application, and the name of the second target application.

The in-vehicle application list may be used to record the information of applications in the vehicle, and the information of applications may include basic information and service information. The basic information of the application may include the name of the application, the version of the application, the physical address of the application, a corresponding client ID, an IP (Internet Protocol) address and a port number of the application, etc. The service information of the application may include a name of a first target service, a name of a second target service, and a priority of invoking the first target service, where the first target service may be a service that a new application can subscribe to, and the second target service may be a service that the new application can implement. Exemplarily, the in-vehicle application list may be as shown in a Table 2.

**Table 2**

| Name of application | Version of application | Physical address of application | Client ID | IP address | Port number | Service can be implemented |
|---|---|---|---|---|---|---|
| Vehicle application | 1.001 | 02:47:01:00:00:2E | 1101 | 10.0.1.3 | 30501 | Vehicle status service |
| Vehicle window application | 1.002 | 02:47:02:00:00:2C | 1103 | 10.0.1.4 | 30501 | Window control service |
| Vehicle door application | 3.001 | 02:47:03:00:00:2C | 1103 | *10.0.1.5* | 30501 | Door control service |

Exemplarily, the new service may be a tailgate control service, the name of the first target application of the tailgate control service may be the vehicle application, and the name of the second target application may be the vehicle door application. Based on the Table 2, the vehicle currently includes the vehicle application, the vehicle window application, and the vehicle door application. Since the name of the first target application corresponding to the tailgate control service is the vehicle application, it may indicate that the subscription relationship between the vehicle application and the tailgate control service is unsubscribed, and the subscription relationship between the vehicle window application and the tailgate control service is un-subscribable. The name of the second target application corresponding to the tailgate control service is the door application, which may indicate that the subscription relationship between the vehicle door application and the tailgate control service is implemented. Therefore, the initialized service subscription table may be as shown in Table 3.

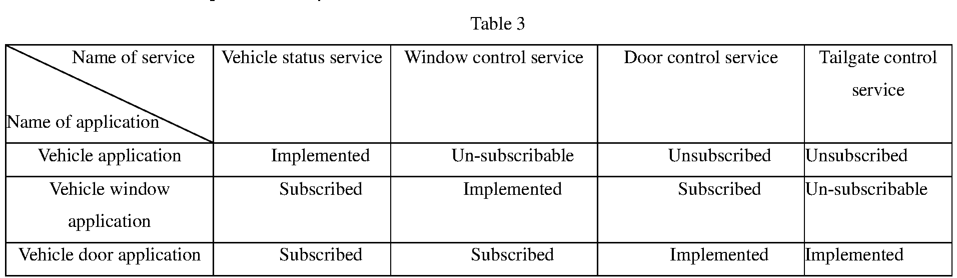

S130: an in-vehicle service list and a service invoking arbitration table of the vehicle are initialized based on the information corresponding to the new service, the in-vehicle service list is used to record information of services, and the service invoking arbitration table is used to record priorities of applications invoking services.

In one embodiment, the SOA service management middleware can initialize the in-vehicle service list based on basic information, a version number of a compatible application, and the name of the second target application of the new service.

The in-vehicle service list can be used to record information of services. For example, the new service can be the tailgate control service, and the in-vehicle service list can be initialized based on basic information of the tailgate control service, the version number of the compatible application, and the name of the second target application. The initialized in-vehicle service list can be shown in a Table 4.

It should be noted that the in-vehicle service list may also record information such as the port number corresponding to the service, which is not displayed in the Table 4.

**Table 4**

| Logo of service | Name of service | Instance ID of service | Version of service | Version of Compatible application | Physical Address | Subnet segment number of service | Status of service | Implemented application |
|---|---|---|---|---|---|---|---|---|
| 1001 | Vehicle status service | 1 | 1.001 | Less than 2,000 | 02:47:00:00:00:2B | 1 | Available | Vehicle Application |
| 1002 | Window control service | 2 | 1.002 | Less than 2,000 | 02:47:00:00:00:2C | 1 | Available | Vehicle window application |
| 1003 | Door control service | 1 | 2.003 | Less than 3,000 | 02:47:00:00:00:2D | 1 | Available | Vehicle door application |
| 1004 | Tailgate control service | 2 | 2.003 | Less than 3.200 | 02:47:00:00:00:2D | 1 | Unavailable | Vehicle door application |

In one embodiment, the SOA service management middleware can obtain the in-vehicle application list of the vehicle, which can be used to record the information of applications in the vehicle; initialize the service invoking arbitration table based on the in-vehicle application list, the name of the first target application, the name of the second target application and the priority of the first target application invoking the new service.

Among them, the service invoking arbitration table can be used to record the priorities of applications invoking services. There are priorities including invokable priority 1, invokable priority 2, implemented, and non-invokable. The invokable priority 1 is a highest priority, the invokable priority 2 is lower than the invokable priority 1, the implemented can represent the application that implements the service, and the non-invokable means that the application does not have a permission to invoke a corresponding service.

Exemplarily, the new service may be the tailgate control service, the name of the first target application of the tailgate control service may be the vehicle application, the name of the second target application may be the door application, the priority of the first target application invoking the new service is the invokable priority 1, and based on the Table 2, the vehicle currently includes the vehicle application, the window application, and the door application, therefore, the service invoking arbitration table that has been initialized may be shown in a Table 5.

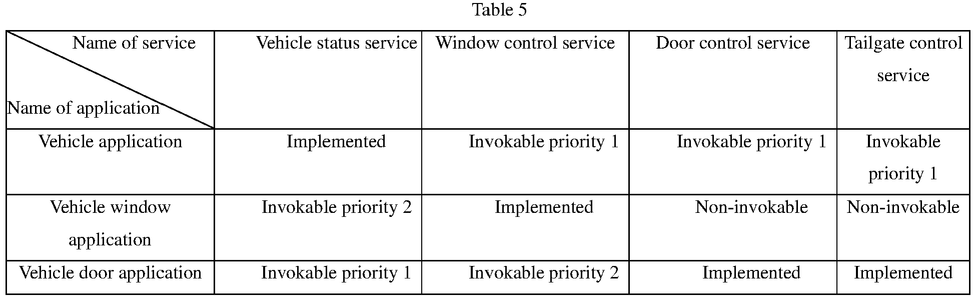

Optionally, the in-vehicle application list may include the version number of the second target application. If the version number of the second target application does not belong to the version number of the compatible application, the SOA service management middleware can report a prompt message to a cloud. The prompt message can be used to prompt the cloud that the version of the second target application is incompatible with the new service, so that the cloud can send a second target application that is compatible with the new service.

S140: In response to the new service being successfully registered, a first target application is obtained based on the initialized service subscription table, where the first target application is an application that can subscribe to the new service.

The information of services include service statuses, the service statuses may include an available status and an unavailable status. The available status can indicate that the service can be used by the corresponding first target application, and the unavailable status can indicate that the service cannot be used by the corresponding first target application. Reasons why the service cannot be used by the corresponding first target application may include: a failure of the service itself, an incompatibility between the service and the version of the application, the service being not registered, and the service being stopped by the cloud. In one embodiment, in response to the new service being successfully registered, the SOA service management middleware may set the service status of the new service in the initialized vehicle service list to available to indicate that the new service is in the available status; and obtain the first target application based on the initialized service subscription table.

Exemplarily, the new service may be the tailgate control service. During a usage process (a process from shutdown to power-on and then to shutdown) of the vehicle, the tailgate control service may be started for a first time when the vehicle is powered on. After starting for the first time, the tailgate control service may register with the SOA service management middleware, that is, send a request for modifying the service status to the SOA service management middleware. After receiving the request for modifying the service status, the SOA service management middleware may set the service status of the tailgate control service in the updated in-vehicle service list (such as Table 4) to available, and obtain the first target application as the vehicle application through the updated service subscription table (such as Table 3).

It should be noted that in order to save a battery power of the vehicle, when the vehicle is turned off, relevant components of the vehicle will clear data of a last operation process. Therefore, when the vehicle is powered on, in order to ensure that the service can be used normally, the service needs to be re-registered with the SOA service management middleware. If the service that was available during the last operation process of the vehicle is not registered after the vehicle is powered on again, the service status of the service can be changed to unavailable in the in-vehicle service list and reported to the cloud, so that when the application of the vehicle in a subsequent cannot realize the function, the cloud can quickly find out a cause of a fault and make suggestions for clearing the fault.

S150: The first target application is informed that the new service is in an available status by publishing the new service to the first target application.

In one embodiment, after the new service is successfully registered, the SOA service management middleware may publish the new service to the first target application obtained based on step S140 to inform the first target application that the new service is in the available status.

Optionally, after learning that the new service is in the available status, the first target application may dynamically adjust corresponding functions, that is, update the functions that can be implemented by the first target application.

Optionally, since the service needs to be re-registered every time the vehicle is powered on, if the service corresponding to the application was registered last time but not this time, there will be a difference in functions that the application can implement, and the difference can be reported to the cloud.

S160: In response to a subscription operation of the first target application, the initialized service subscription table is updated, where the subscription relationship between the new service and the first target application in the initialized service subscription table is unsubscribed, and the subscription relationship between the new service and the first target application in the updated service subscription table is subscribed.

In one embodiment, the SOA service management middleware may modify the subscription relationship between the new service and the first target application in the initialized service subscription table from the unsubscribed to the subscription in response to the subscription operation of the first target application, so as to update the initialized service subscription table.

S170: In response to an invoking request of the first target application to the new service, service content corresponding to the new service is provided to the first target application.

In one embodiment, there may be only one first target application, and the SOA service management middleware may obtain the in-vehicle application list and the initialized in-vehicle service list in response to the first target application's invoking request for the new service; establish a invoking task based on the in-vehicle application list and the updated in-vehicle service list; and provide the service content corresponding to the new service to the first target application based on the invoking task.

Among them, the updated in-vehicle service list may include a physical address, an IP address, an identifier, and a port number of the new service, and the in-vehicle application list includes a client identifier, an application physical address, and a port number of the first target application.

Optionally, the SOA service management middleware may establish the invoking task based on the physical address, the IP address, the identifier, the port number and the client identifier of the first target application of the new service.

Optionally, after establishing the invoking task, the SOA service management middleware may obtain an invoking process corresponding to the invoking task; generate information of an invoking chain based on the invoking process; and upload the information of the invoking chain to the cloud.

In the prior art, a SOMEIP protocol is usually used to implement the deployment and invoking new services. The SOMEIP protocol is a point-to-point protocol. When deploying and invoking the new service through the SOMEIP protocol, the service needs to be bound to the application, for example, binding the physical address, etc. Therefore, when the service is deployed to the vehicle, it is necessary to first know a specific model of the vehicle, the information of all applications that can invoke the service, and the information of the physical address, which results in a need for the service to be deployed differently for the differences in vehicles of different models, making a management workload being huge and redundant, and reducing a speed of deploying and invoking the service. In the embodiment of the present application, when the new service is deployed and invoked, the SOA service management middleware can initialize multiple lists based on the information obtained from the cloud, so as to implement the subscription and invoking of the service by the application based on the initialized multiple lists, and the registration and release of the service, so that when the application invokes the service, detailed content of the invoking can be implemented based on the SOA service management middleware, so that the application and the service do not need to care about each other's version numbers and other contents, thereby realizing a decoupling of the service and the application, and reducing a development cost.

Moreover, in an embodiment of the present application, the SOA service management middleware can also update the corresponding initialized list in real time based on a running status of the new service (such as registration, normal operation, stop, etc.), so that the first target application can timely understand a change in the service status of the new service based on the SOA service management middleware to flexibly adjust its own functions.

In one embodiment, there can be multiple first target applications, and the SOA service management middleware can respond to the invoking requests for the new service from the multiple first target applications, and obtain the initialized service invoking arbitration table; determine a third target application based on the initialized service invoking arbitration table, and the third target application can be an application with a highest priority for invoking the new service among the multiple first target applications; obtain the in-vehicle application list and the initialized in-vehicle service list; establish an invoking task based on the in-vehicle application list and the initialized in-vehicle service list; and provide the service content corresponding to the new service to the third target application based on the invoking task.

Optionally, if the invoking task fails to successfully invoke the new service, the SOA service management middleware can confirm whether the new service has a fault; if the new service has the fault, change the service status of the new service in the initialized in-vehicle service list to unavailable; and send a prompt message to the first target application to prompt the first target application that the new service cannot be invoked.

Optionally, the SOA service management middleware can confirm whether the new service has the fault based on whether the new service meets a fault condition. For example, if the fault condition is that the service has not been found for N consecutive times (N is a positive integer), then the fault can be determined to be that the service has not been started.

Optionally, after receiving the prompt message indicating that the new service of the first target application cannot be invoked, the first target application may dynamically adjust its own corresponding function, that is, the application confirms that the new service cannot be implemented currently, and thus executes other functions.

Optionally, after confirming that the new service has the fault, the SOA service management middleware may report the fault of the new service to the cloud in real-time or periodically.

In one embodiment, the SOA service management middleware can stop the new service in response to a service stopping instruction sent by the cloud; change the service status of the new service in the initialized in-vehicle service list to unavailable; and send a prompt message to the first target application to prompt the first target application that the new service cannot be invoked.

In an embodiment of the present application, when the service has the fault or the cloud commands the service to stop, the SOA service management middleware can promptly modify content of a relevant list so that the application can re-adjust its own achievable functions based on the modified list and facilitate subsequent troubleshooting.

After obtaining the new service and information corresponding to the new service, the service management method provided in this embodiment initializes the service subscription table of the vehicle for recording the subscription relationships between services and applications based on the information corresponding to the new service, where the subscription relationships may include implemented, subscribed, un-subscribable, and unsubscribed; in response to the successful registration of the new service, obtains the first target application that can subscribe to the new service based on the initialized service subscription table, publishes the new service to the first target application to inform the first target application that the new service is available; in response to the subscription operation of the first target application, updates the initialized service subscription table, where the subscription relationship between the new service and the first target application in the initialized service subscription table is the unsubscribed, and the subscription relationship between the new service and the first target application in the updated service subscription table is subscribed; in response to the first target application's invoking request for the new service, provides the service content corresponding to the new service to the first target application. Through the above method, after obtaining the new service and the information corresponding to the new service, the SOA service management middleware can initialize the service subscription table, and after completing the registration, publication, and subscription of the new service, update the initialized service subscription table, so that the SOA service management middleware can dynamically maintain multiple tables related to services and applications, so that the first target application and the new service do not need to know each other's detailed information (such as version number, physical address, etc.), and the first target application can obtain the service content corresponding to the new service by sending the invoking request to the SOA service management middleware, thereby realizing the decoupling of services and applications and reducing development and management costs.

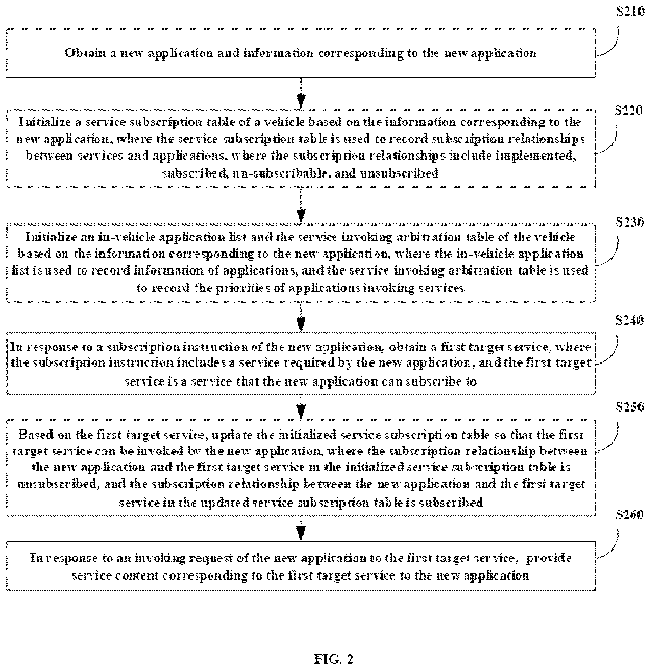

Please refer to FIG. 2. The present application provides an application management method, which is applied to the SOA application management middleware. The application management method includes:
S210: A new application and information corresponding to the new application are obtained.

The new application may refer to an application that has not been installed on the vehicle or an upgraded application version of an application that has been installed on the vehicle. The information corresponding to the new application includes basic information and service information. The basic information of the application may include the name of the application, a version of the application, a physical address of the application, a corresponding client ID, an IP (Internet Protocol) address and a port number deployed for the application, etc. The service information of the application may include the name of the first target service, the name of the second target service and the priority of invoking the first target service, where the first target service may be the service that the new application can subscribe to, and the second target service may be the service that the new application can implement.

In one embodiment, the new application and the information corresponding to the new applications can be stored in the cloud, and the vehicle can obtain the new application and the information corresponding to the new application through a method of OTA.

In an embodiment of the present application, the cloud may include multiple versions of new applications, each version of the new application may be applicable to a different vehicle model, and the cloud may send the new application applicable to the vehicle and the information corresponding to the new application to the vehicle according to the vehicle model, so that the SOA application management middleware does not need to obtain multiple versions of applications from the cloud, and then confirm the application applicable to the vehicle from the multiple versions of applications, thereby reducing a waste of vehicle storage resources and data processing resources, and speeding up the deployment of applications on the vehicle.

S220: A service subscription table of the vehicle is initialized based on the information corresponding to the new application, where the service subscription table is used to record subscription relationships between services and applications, where the subscription relationships include implemented, subscribed, un-subscribable, and unsubscribed.

The subscription relationships between services and applications may include implemented, un-subscribable, unsubscribed, and subscribed. The implemented may indicate that the application can provide the corresponding service, the un-subscribable may indicate that the application does not have a permission to invoke the corresponding service, the unsubscribed may indicate that the application has a permission to invoke the service but has not subscribed to the corresponding service, and the subscribed may indicate that the application has the permission to invoke the service and has subscribed to the corresponding service. The service subscription table may be shown in the Table 1.

In one embodiment, after the vehicle obtains the new application and the information corresponding to the new application based on step S210, the vehicle can control the SOA application management middleware to initialize the service subscription table based on the in-vehicle application list, the name of the first target service, and the name of the second target service.

S230: The in-vehicle application list and the service invoking arbitration table of the vehicle are initialized based on the information corresponding to the new application, where the in-vehicle application list is used to record the information of applications, and the service invoking arbitration table is used to record priorities of applications invoking services.

In one embodiment, the SOA application management middleware can initialize the in-vehicle application list based on the basic information of the new application and the name of the first target service. Exemplarily, the in-vehicle application list can be as shown in the Table 2.

In one embodiment, the SOA application management middleware can obtain the in-vehicle service list of the vehicle, which is used to record the information of services in the vehicle; initialize the service invoking arbitration table based on the in-vehicle service list, the name of the first target service, the name of the second target service and the priority of invoking the first target service.

Optionally, the SOA application management middleware can initialize the priority of the new application and the corresponding first target service in the service invoking arbitration table based on the priority of invoking the first target service, and initialize the priority of the new application and the corresponding second target service in the service invoking arbitration table to implemented, and initialize the priority of the new application and other remaining services of the vehicle to non-invokable.

S240: In response to a subscription instruction of the new application, a first target service is obtained, where the subscription instruction includes a service required by the new application, and the first target service is a service that the new application can subscribe to.

In one embodiment, the SOA application management middleware can respond to the subscription instruction of the new application and confirm the service required by the new application; obtain the vehicle's in-vehicle service list, which can be used to record information of services in the vehicle, and the information of services can include service statuses and service identifications; based on the service statuses and the service identifications, determine whether the service required by the new application exists and is in an available status; if the service required by the new application exists and is in the available status, obtain the first target service based on the initialized service invoking arbitration table and the service required by the new application.

S250: Based on the first target service, the initialized service subscription table is updated so that the first target service can be invoked by the new application, where the subscription relationship between the new application and the first target service in the initialized service subscription table is unsubscribed, and the subscription relationship between the new application and the first target service in the updated service subscription table is subscribed.

In one embodiment, after acquiring the first target service, the subscription relationship between the new application and the first target service in the initialized service subscription table may be modified to subscribed, thereby updating the initialized service subscription table.

S260: In response to an invoking request of the new application to the first target service, service content corresponding to the first target service is provided to the new application.

In one embodiment, the SOA application management middleware may provide the service content corresponding to the first target service to the new application in response to the invoking request of the new application to the first target service.

In the embodiment of the present application, the SOA application management middleware can initialize the vehicle application list, service subscription table, and service invoking arbitration table, and update the corresponding initialized list in real time based on a running status (such as registration, normal operation, stop, etc.) of the new service, so that the first target application and the new service can communicate and transmit data based on SOA application management middleware, thereby realizing the decoupling of services and applications and reducing development and management costs.

This embodiment provides the service management method, which can deploy the new application or upgrade the installed application after obtaining the new application and the information corresponding to the new application; and initialize the service subscription table, the vehicle application list and the service invoking arbitration table, so that multiple tables related to services and applications can be dynamically maintained through the SOA application management middleware, so that the new application and the first target service do not need to know each other's detailed information (such as the version number, physical address, etc.). The new application can obtain the service content corresponding to the first target service through the invoking request, thereby realizing the decoupling of the service and the application and reducing development and management costs.

In order to better understand the solution in the embodiment of the present application, the complete process of the solution proposed in the present application is introduced below.

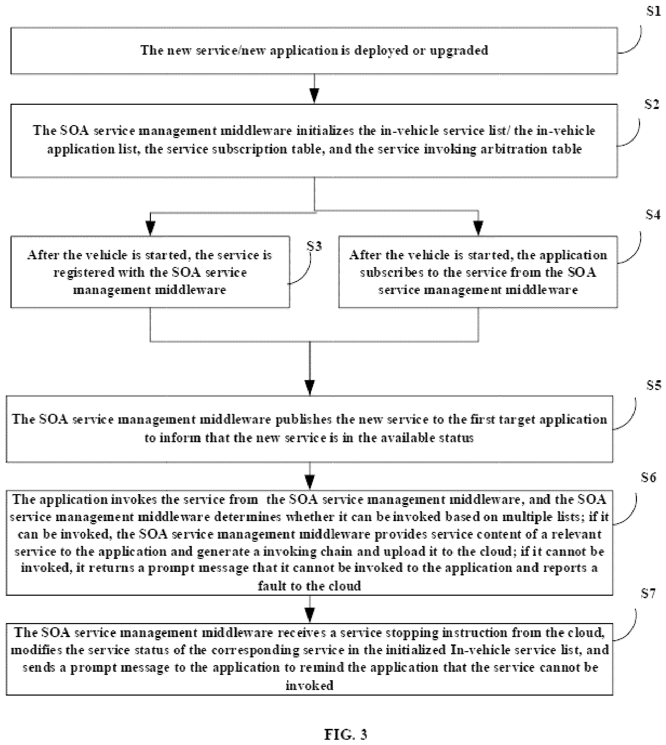

Please refer to FIG. 3. After obtaining the new service/new application and the information corresponding to the new service/new application, the new service/new application can be deployed or upgraded based on step S1 (when the new service/new application is a service/new application not installed on the vehicle, the new service/new application is deployed based on step S1; when the new service/new application is a new version of the service/new application that has been installed on the vehicle, the new service/new application is upgraded based on step S1); then the SOA service/ application management middleware can execute step S2 based on the obtained information, thereby initializing multiple lists. After the vehicle is started, all services on the vehicle including the new service can be registered with the SOA service/application management middleware based on step S3; while all services are registering, all applications can also subscribe to the service from the SOA service/application management middleware based on step S4; after the new service is successfully registered, the SOA service/Application management middleware can publish the new service to the first target application corresponding to the new service based on step S5. Afterwards, all applications including the new application can invoke a relevant service based on step S6. If it can be invoked, the SOA service/application management middleware can provide the service content of the relevant service to the application and generate the invoking chain to upload to the cloud; if it cannot be invoked, it returns the prompt message that it cannot be invoked to the application and reports the fault to the cloud. At the same time, when the SOA service/application management middleware receives the service stopping instruction from the cloud, it can modify the service status of the corresponding service in the initialized in-vehicle service list based on step S7, and send the prompt message to the application to prompt the application that the service cannot be invoked.

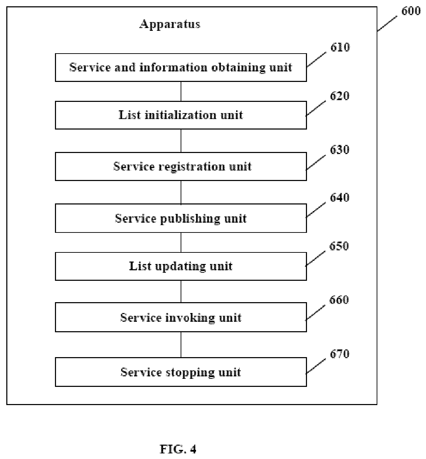

Please refer to FIG. 4, a service management apparatus 600 provided in the present application runs on the SOA service management middleware, and the service management apparatus 600 includes:
A service and information obtaining unit 610 is used to obtain the new service and information corresponding to the new service.

A list initialization unit 620 is used to initialize the service subscription table of the vehicle based on the information corresponding to the new service, and the service subscription table is used to record the subscription relationships between services and applications.

A service registration unit 630 is configured to obtain the first target application based on the initialized service subscription table in response to the new service being successfully registered, where the first target application is the application that can subscribe to the new service.

A service publishing unit 640 is used to publish the new service to the first target application to inform the first target application that the new service is in the available status.

A list updating unit 650 is used to update the initialized service subscription table in response to the subscription operation of the first target application, where the subscription relationship between the new service and the first target application in the initialized service subscription table is unsubscribed, and the subscription relationship between the new service and the first target application in the updated service subscription table is subscribed.

A service invoking unit 660 is used to provide the service content corresponding to the new service to the first target application in response to the invoking request of the first target application for the new service.

In one embodiment, the list initialization unit 620 is specifically used to initialize the vehicle's in-vehicle service list and service invoking arbitration table based on the information corresponding to the new service. The in-vehicle service list is used to record the information of services, and the service invoking arbitration table is used to record priorities of applications invoking services.

In one embodiment, the information corresponding to the new service includes basic information and application information, the application information includes the version number of the compatible application, the name of the first target application, the name of the second target application, and the priority of the first target application to invoke the new service, the second target application is the application that implements the new service, and the list initialization unit 620 is specifically used to initialize the in-vehicle service list based on the basic information, the version number of the compatible application, and the name of the second target application; obtain the in-vehicle application list of the vehicle, the in-vehicle application list is used to record information of applications in the vehicle; initialize the service invoking arbitration table based on the in-vehicle application list, the name of the first target application, the name of the second target application, and the priority of the first target application invoking the new service; initialize the service subscription table based on the in-vehicle application list, the name of the first target application, and the name of the second target application.

Among them, the in-vehicle application list includes the version number of the second target application. Optionally, the list initialization unit 620 is specifically used to report the prompt message to the cloud if the version number of the second target application does not belong to the version number of the compatible application. The prompt message is used to prompt the cloud that the version of the second target application is incompatible with the new service, so that the cloud can send a second target application that is compatible with the new service.

In one embodiment, the service registration unit 630 is specifically used to respond to the successful registration of the new service, change the service status of the new service to available, so as to indicate that the new service is in the available status; and obtain the first target application based on the initialized service subscription table.

In one embodiment, the service invoking unit 660 is specifically used to respond to the invoking request of the first target application to the new service, obtain the in-vehicle application list and the initialized in-vehicle service list; establish the invoking task based on the in-vehicle application list and the initialized in-vehicle service list; and provide the service content corresponding to the new service to the first target application based on the invoking task.

Among them, optionally, the updated in-vehicle service list includes the physical address, the IP address, the identifier, and the port number of the new service, and the in-vehicle application list includes the client identifier, the application physical address, and the port number of the first target application. The service invoking unit 660 is specifically used to establish the invoking task based on the physical address, the IP address, the identifier, and the port number of the new service and the client identifier, the application physical address, and the port number of the first target application; obtain the invoking process corresponding to the invoking task; generate information of the invoking chain based on the invoking process; and upload the information of the invoking chain to the cloud.

Optionally, the in-vehicle service list includes the service status, and the service invoking unit 660 is specifically used to confirm whether the new service has the fault if the invoking task fails to successfully invoke the new service; if the new service has the fault, change the service status of the new service in the initialized in-vehicle service list to unavailable; send the prompt message to the first target application to prompt the first target application that the new service cannot be invoked.

As another embodiment, there are multiple first target applications, and the service invoking unit 660 is specifically used for responding to the invoking requests of multiple first target applications to the new service, obtaining the initialized service invoking arbitration table; determining the third target application based on the initialized service invoking arbitration table, the third target application being the application with the highest priority of invoking the new service among the multiple first target applications; obtaining the in-vehicle application list and the updated in-vehicle service list; establishing the invoking task based on the in-vehicle application list and the updated in-vehicle service list; and providing the service content corresponding to the new service to the third target application based on the invoking task.

The service management apparatus 600 further includes:
A service stopping unit 670 is used to stop the new service in response to the service stopping instruction sent by the cloud; change the service status of the new service in the initialized in-vehicle service list to unavailable; and send the prompt message to the first target application to prompt the first target application that the new service cannot be invoked.

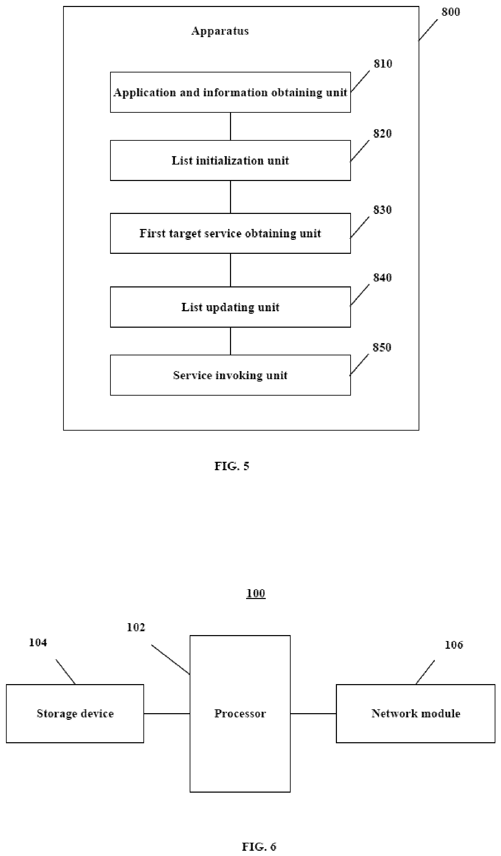

Please refer to FIG. 5. The present application provides an application management apparatus 800, which runs on the SOA application management middleware. The application management apparatus 800 includes:
An application and information obtaining unit 810 is used to obtain the new application and the information corresponding to the new application.

A list initialization unit 820 is used to initialize the service subscription table of the vehicle based on the information corresponding to the new application, and the service subscription table is used to record the subscription relationships between services and applications.

A first target service obtaining unit 830 is used to obtain the first target service in response to the subscription instruction of the new application, where the subscription instruction includes the service required by the new application, and the first target service is the service that the new application can subscribe to.

A list updating unit 840 is used to update the initialized service subscription table based on the first target service so that the first target service can be invoked by the new application, where the subscription relationship between the new application and the first target service in the initialized service subscription table is unsubscribed, and the subscription relationship between the new application and the first target service in the updated service subscription table is subscribed.

A service invoking unit 850 provides the service content corresponding to the first target service to the new application in response to the invoking request of the new application to the first target service.

In one embodiment, the list initialization unit 820 is specifically used to initialize the vehicle's in-vehicle application list and service invoking arbitration table based on the information corresponding to the new application, the in-vehicle application list is used to record the information of applications, and the service invoking arbitration table is used to record priorities of applications invoking services.

Among them, optionally, the information corresponding to the new application includes basic information and service information, the service information includes the name of the first target service, the name of the second target service and the priority of invoking the first target service, the second target service is the service that can be implemented by the new application, and the list initialization unit 820 is specifically used to initialize the in-vehicle application list based on the basic information and the name of the first target service; obtain the in-vehicle service list of the vehicle, the in-vehicle service list is used to record information of services in the vehicle; initialize the service invoking arbitration table based on the in-vehicle service list, the name of the first target service, the name of the second target service and the priority of invoking the first target service; initialize the service subscription table based on the in-vehicle service list, the name of the first target service and the name of the second target service.

In one embodiment, the first target service obtaining unit 830 is specifically used to respond to the subscription instruction of the new application, confirm the service required by the new application; obtain the in-vehicle service list of the vehicle, the vehicle application list is used to record the information of services in the vehicle, and the information of services include the service statuses and the service identifications; based on the service statuses and the service identifications, confirm whether the service required by the new application exists and is in the available status; if the service required by the new application exists and is in the available status, obtain the first target service based on the initialized service invoking arbitration table and the service required by the new application; the modifying the initialized service subscription table based on the first target service includes: modifying the subscription relationship between the new application and the first target service in the initialized service subscription table to subscribed.

A vehicle provided by the present application will be described below in conjunction with FIG. 6.

Please refer to FIG. 6. Based on the above service management method, the application management method, and the apparatus, the embodiment of the present application also provides a vehicle 100 that can execute the above service management method and application management method. The vehicle 100 includes one or more (only one is shown in the figure) processors 102, a storage device 104, and a network module 106 that are coupled to each other. The storage device 104 stores a program that can execute the content of the above embodiment, and the processor 102 can execute the program stored in the storage device 104.

Among them, the processor 102 may include one or more processing cores. The processor 102 uses various interfaces and lines to connect various parts inside the electronic device 100. The processor 102 performs various functions of the electronic device 100 and processes data by running or executing instructions, programs, code sets or instruction sets stored in the storage device 104, and invoking data stored in the storage device 104. The processor 102 can be implemented in at least one hardware form of digital signal processing (DSP), field programmable gate array (FPGA), and programmable logic array (PLA). The processor 102 can integrate one or a combination of a central processing unit (CPU), a graphics processing unit (GPU), and a modem. Among them, the CPU mainly processes an operating system, user interfaces, and application programs; the GPU is responsible for rendering and drawing display content; and the modem is used to process wireless communications. It can be understood that the modem may not be integrated into the processor 102, but may be implemented separately through a communication chip.

The storage device 104 may include a random access memory (RAM) or a read-only memory (ROM). The storage device 104 may be used to store instructions, programs, codes, code sets or instruction sets. The storage device 104 may include a program storage area and a data storage area, where the program storage area may store instructions for implementing the operating system, instructions for implementing at least one function (such as a touch function, a sound playback function, an image playback function, etc.), instructions for implementing following various method embodiments, etc. The data storage area may also store data (such as a phone book, audio and video data, chat record data) created by a terminal 200 during use.

The network module 106 is used to implement information interaction between the vehicle 100 and the cloud, for example, transmission of device control instructions, operation request instructions, and status information obtaining instructions.

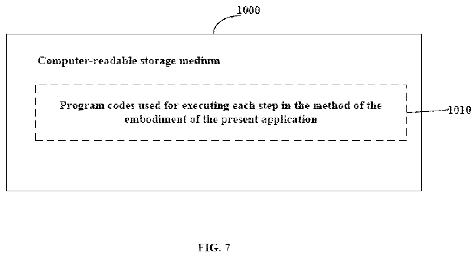

Please refer to FIG. 7, which shows a block diagram of a computer-readable storage medium provided in an embodiment of the present application. The computer-readable storage medium 1000 stores program codes, which can be invoked by a processor to execute the method described in the above method embodiment.

The computer-readable storage medium 1000 may be an electronic memory such as a flash memory, an EEPROM (electrically erasable programmable read-only memory), an EPROM, a hard disk, or a ROM. Optionally, the computer-readable storage medium 1000 includes a non-transitory computer-readable storage medium. The computer-readable storage medium 1000 has a storage space for program codes 1010 for executing any method steps in the above method. These program codes can be read from or written to one or more computer program products. The program codes 1010 can be compressed, for example, in an appropriate form.

In summary, the present application provides the service management method, the application management method, the apparatus, and the vehicle. After acquiring the new service and the information corresponding to the new service, the vehicle's service subscription table for recording the subscription relationships between services and applications is initialized based on the information corresponding to the new service, where the subscription relationships may include implemented, subscribed, un-subscribable, and unsubscribed. In response to the successful registration of the new service, the first target application that can subscribe to the new service is obtained based on the initialized service subscription table, and the new service is published to the first target application to inform the first target application that the new service is available; in response to the subscription operation of the first target application, the initialized service subscription table is updated, where the subscription relationship between the new service and the first target application in the initialized service subscription table is unsubscribed, and the subscription relationship between the new service and the first target application in the updated service subscription table is subscribed; in response to the first target application's invoking request for the new service, the service content corresponding to the new service is provided to the first target application. Through the above method, a obtaining the new service and the corresponding information of the new service, the SOA service management middleware can initialize the service subscription table, and after completing the registration, publishing, and subscription of the new service, update the initialized service subscription table, so that the SOA service management middleware dynamically maintains multiple tables related to services and applications, so that the first target application and the new service do not need to know each other's detailed information (such as the version number, the physical address, etc.). The service management middleware can obtain the service content corresponding to the new service by sending the invoking request, thereby decoupling the service from the application and reducing development and management costs.

Finally, it should be noted that the above embodiments are only used to illustrate the technical solution of the present application, rather than to limit it. After detailed description, the ordinary skilled in the art should understand that they can still modify the technical solutions recorded in the aforementioned embodiments, or make equivalent substitutions for some of the technical features therein; and these modifications or substitutions do not drive the essence of the corresponding technical solutions away from the spirit and scope of the technical solutions of the embodiments of the present application.

## Claims

1. A service management method, **characterized in that**, the service management method applies to a SOA service management middleware, and comprises:
obtaining a new service and information corresponding to the new service;
initialize a service subscription table of a vehicle based on the information corresponding to the new service, the service subscription table being used to record subscription relationships between services and applications, the subscription relationships comprising implemented, subscribed, un-subscribable, and unsubscribed;
in response to the new service being successfully registered, obtaining a first target application based on the initialized service subscription table, the first target application being an application that can subscribe to the new service;
publishing the new service to the first target application to inform the first target application that the new service is in an available status;
in response to a subscription operation of the first target application, updating the initialized service subscription table, wherein the subscription relationship between the new service and the first target application in the initialized service subscription table is unsubscribed, and the subscription relationship between the new service and the first target application in the updated service subscription table is subscribed;
in response to an invoking request of the first target application to the new service, providing service content corresponding to the new service to the first target application.

2. The service management method according to claim 1, wherein the service management method further comprises:
initializing an in-vehicle service list and a service invoking arbitration table of the vehicle based on the information corresponding to the new service, the in-vehicle service list being used to record information of services, and the service invoking arbitration table being used to record priorities of applications invoking services.

3. The service management method according to claim 2, wherein the information of services comprise services statuses, and obtaining the first target application based on the initialized service subscription table in response to the new service being successfully registered, comprises:
in response to the new service being successfully registered, indicating that the new service is in an available status by changing the service status of the new service in the initialized in-vehicle service list to available;
obtaining the first target application based on the initialized service subscription table.

4. The service management method according to claim 2, wherein the information corresponding to the new service comprises basic information and application information, the application information comprises a version number of a compatible application, a name of the first target application, a name of a second target application, and a priority of the first target application invoking the new service, the second target application is an application that implements the new service, and initializing the in-vehicle service list and the service invoking arbitration table of the vehicle based on the information corresponding to the new service comprises:
initializing the in-vehicle service list based on the basic information, the version number of the compatible application, and the name of the second target application;
acquiring an in-vehicle application list of the vehicle, the in-vehicle application list being used to record information of applications in the vehicle;
initializing the service invoking arbitration table based on the in-vehicle application list, the name of the first target application, the name of the second target application, and the priority of the first target application invoking the new service;
the initializing the service subscription table of the vehicle based on the information corresponding to the new service, comprising:
initializing the service subscription table based on the in-vehicle application list, the name of the first target application, and the name of the second target application.

5. The service management method according to claim 4, wherein the in-vehicle application list comprises a version number of the second target application, and the service management method further comprises:
if the version number of the second target application does not belong to the version number of the compatible application, reporting a prompt message to a cloud, the prompt message being used to prompt the cloud that a version of the second target application is incompatible with the new service, and the cloud issuing the second target application that is compatible with the new service.

6. The service management method according to claim 2, wherein providing service content corresponding to the new service to the first target application in response to the invoking request of the first target application to the new service, comprises:
in response to an invoking request of the first target application to the new service, obtaining an in-vehicle application list and the initialized in-vehicle service list;
establishing an invoking task based on the in-vehicle application list and the initialized in-vehicle service list;
providing the service content corresponding to the new service to the first target application based on the invoking task.

7. The service management method according to claim 6 , wherein the initialized in-vehicle service list comprises a physical address, an IP address, an identifier, a port number, the in-vehicle application list comprises a client identifier, an application physical address, and a port number of the first target application, and the establishing the invoking task based on the in-vehicle application list and the initialized in-vehicle service list comprises:
establishing the invoking task based on the physical address, the IP address, the identifier, and the port number of the new service and the client identifier, the application physical address, and the port number of the first target application;
the service management method further comprising:
obtaining an invoking process corresponding to the invoking task;
generating information of an invoking chain based on the invoking process; and
uploading the information of the invoking chain to the cloud.

8. The service management method according to claim 6, wherein the in-vehicle service list comprises a service status, and the service management method further comprises:
if the invoking task fails to successfully invoke the new service, confirming whether the new service has a fault;
if the new service has the fault, changing the service status of the new service in the initialized in-vehicle service list to unavailable;
sending a prompt message to the first target application to prompt the first target application that the new service cannot be invoked.

9. The service management method according to claim 2, wherein there is a plurality of first target applications, and the providing service content corresponding to the new service to the first target application in response to the invoking request of the first target application to the new service, comprises:
in response to invoking requests of the plurality of first target applications to the new service, obtaining an initialized service invoking arbitration table;
determining a third target application based on the initialized service invoking arbitration table, the third target application being an application with a highest priority of invoking the new service among the plurality of first target applications;
obtaining an in-vehicle application list and the initialized in-vehicle service list;
establishing an invoking task based on the in-vehicle application list and the initialized in-vehicle service list; and
providing the service content corresponding to the new service to the third target application based on the invoking task.

10. The service management method according to claim 1, wherein the service management method further comprises:
stopping the new service in response to a service stopping instruction sent by the cloud;
changing the service status of the new service in the initialized in-vehicle service list to unavailable;
sending a prompt message to the first target application to prompt the first target application that the new service cannot be invoked.

11. An application management method, **characterized in that**, the application management method applies to a SOA application management middleware, and comprises:
obtaining a new application and information corresponding to the new application;
initializing a service subscription table of a vehicle based on the information corresponding to the new application, the service subscription table being used to record subscription relationships between services and applications, the subscription relationships comprising implemented, subscribed, un-subscribable, and unsubscribed;
obtaining a first target service in response to a subscription instruction of the new application, the subscription instruction comprising a service required by the new application, and the first target service being a service that the new application can subscribe to;
updating the initialized service subscription table based on the first target service, so that the first target service can be invoked by the new application, wherein the subscription relationship between the new application and the first target service in the initialized service subscription table is unsubscribed, and the subscription relationship between the new application and the first target service in the updated service subscription table is subscribed;
providing service content corresponding to the first target service to the new application in response to an invoking request of the new application to the first target service.

12. The application management method according to claim 11, wherein the application management method further comprises:
initializing an in-vehicle application list and a service invoking arbitration table of the vehicle based on the information corresponding to the new application, the in-vehicle application list being used to record the information of applications, and the service invoking arbitration table being used to record priorities of applications invoking services.

13. The application management method according to claim 12, wherein the information corresponding to the new application comprises basic information and service information, the service information comprises a name of the first target service, a name of a second target service and a priority of invoking the first target service, the second target service comprises a service that can be implemented by the new application, and the initializing the in-vehicle application list and the service invoking arbitration table of the vehicle based on the information corresponding to the new application, comprises:
initializing the in-vehicle application list based on the basic information and the name of the first target service;
obtaining an in-vehicle service list of the vehicle, the in-vehicle service list being used to record information of services in the vehicle;
initializing the service invoking arbitration table based on the in-vehicle service list, the name of the first target service, the name of the second target service, and the priority of invoking the first target service;
wherein the initializing the service subscription table of the vehicle based on the information corresponding to the new application, comprises:
initializing the service subscription table based on the in-vehicle service list, the name of the first target service, and the name of the second target service.

14. The application management method according to claim 12, wherein obtaining the first target service in response to the subscription instruction of the new application, comprises:
confirming the service required by the new application in response to the subscription instruction of the new application;
obtaining an in-vehicle service list of the vehicle, the in-vehicle service list being used to record information of services in the vehicle, the information of services comprise service statuses and service identifications;
confirming whether the service required by the new application exists and is in an available status based on the service status and the service identification;
if the service required by the new application exists and is in the available status, obtaining the first target service based on the initialized service invoking arbitration table and the service required by the new application.

15. A service management apparatus, **characterized in that**, the service management apparatus runs on a SOA service management middleware and comprises:
a service and information obtaining unit, being used to obtain a new service and information corresponding to the new service;
a list initialization unit, being used to initialize a service subscription table of the vehicle based on the information corresponding to the new service, the service subscription table being used to record subscription relationships between services and applications;
a service registration unit, being used to , in response to the new service being successfully registered, obtain a first target application based on the initialized service subscription table, wherein the first target application is an application that can subscribe to the new service;
a service publishing unit, being used to publish the new service to the first target application to inform the first target application that the new service is in an available status.;
a list updating unit, being used to update the initialized service subscription table in response to a subscription operation of the first target application, wherein the subscription relationship between the new service and the first target application in the initialized service subscription table is unsubscribed, and the subscription relationship between the new service and the first target application in the updated service subscription table is subscribed;
a service invoking unit, being used to provide service content corresponding to the new service to the first target application in response to an invoking request of the first target application for the new service.

16. An application management apparatus, **characterized in that**, the application management apparatus runs on a SOA application management middleware and comprises:
an application and information obtaining unit, being used to obtain a new application and information corresponding to the new application;
a list initialization unit, being used to initialize a service subscription table of a vehicle based on the information corresponding to the new application, wherein the service subscription table being used to record subscription relationships between services and applications;
a first target service obtaining unit, being used to obtain a first target service in response to a subscription instruction of the new application, wherein the subscription instruction comprises a service required by the new application, and the first target service is a service that the new application can subscribe to;
a list updating unit, being used to update the initialized service subscription table based on the first target service, so that the first target service can be invoked by the new application, wherein the subscription relationship between the new application and the first target service in the initialized service subscription table is unsubscribed, and the subscription relationship between the new application and the first target service in the updated service subscription table is subscribed;
a service invoking unit, being used to provide service content corresponding to the first target service to the new application in response to an invoking request of the new application to the first target service.

17. A vehicle, **characterized in that**, the vehicle comprises a processor and a storage device;
one or more programs are stored in the storage device and configured to be executed by the processor, and the one or more programs are configured to execute the method according to any one of claims 1 to 14.

18. A computer-readable storage medium, **characterized in that**, program codes are stored in the computer-readable storage medium, when the program codes are run, the method according to any one of claims 1 to 14 is executed.
